# EUROPEAN PATENT SPECIFICATION

(11) **EP 0 562 218 B1**
(45) Date of publication and mention of the grant of the patent: **28.08.1996**
(21) Application number: 92830288.4
(22) Date of filing: 04.06.1992
(51) Int. Cl.: F16C 35/06, F16C 33/76

(54) **Improved support for involute bearings**
Lagerträger für Evolventenlager
Support pour palier involvant

(30) Priority: 27.03.1992 IT MI920745
(43) Date of publication of application: 29.09.1993
(73) Proprietor: Montagna, Robertino, I-27040 Verrua Po (Pavia) (IT)
(72) Inventor: Montagna, Robertino, I-27040 Verrua Po (Pavia) (IT)
(74) Representative: Cicogna, Franco

(56) References cited:
- EP-A- 0 235 366
- DE-A- 3 838 672
- FR-A- 1 071 374

## Description

### BACKGROUND OF THE INVENTION

The present invention relates to an improved support including swinging ball or roller bearings.

These bearings, which are conventionally mainly used for supporting rotary shafts, must be protected, in their condition assembled to the support body, from powder and other substances susceptible to impair their proper operation.

Moreover, these bearings must provide a good sealing with respect to the lubricating grease necessary for a proper lubrication of the bearing itself.

To this end, there are conventionally used annular gaskets or seals which, however, have the drawback of not assuring an efficient sealing, since they can not compensate or adjust the very great oscillations to which the rotary shaft is subjected.

The document DE-A-3838672 discloses a bearing assembly as disclosed in the preamble of the claim.

### SUMMARY OF THE INVENTION

Accordingly, the aim of the present invention is to overcome the above mentioned drawback, by providing a support in which the sealing gasket is adapted to operate in a very efficient manner so as to minimize possible oscillations of the rotary shaft.

Within the scope of the above mentioned aim, a main object of the present invention is to provide such a bearing support in which the lubricating grease is efficiently prevented from leaking, and in which polluting powder or substances are efficiently prevented from entering the bearing.

Yet another object of the present invention is to provide such a bearing support which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a support for a swinging bearing, having the features of the characterizing part of Claim 1.

### BRIEF DESCRIPTION OF THE DRAWINGS

Further characteristics and advantages of the present invention will become more apparent from the following detailed disclosure of a preferred, though not exclusive, embodiment thereof, which is illustrated, by way of an indicative but not limitative example, in the figures of the accompanying drawings, where:
Figure 1 is a front cross-sectional view of the support according to the invention;
   and
Figure 2 is a top cross-sectional view of the support according to the invention.

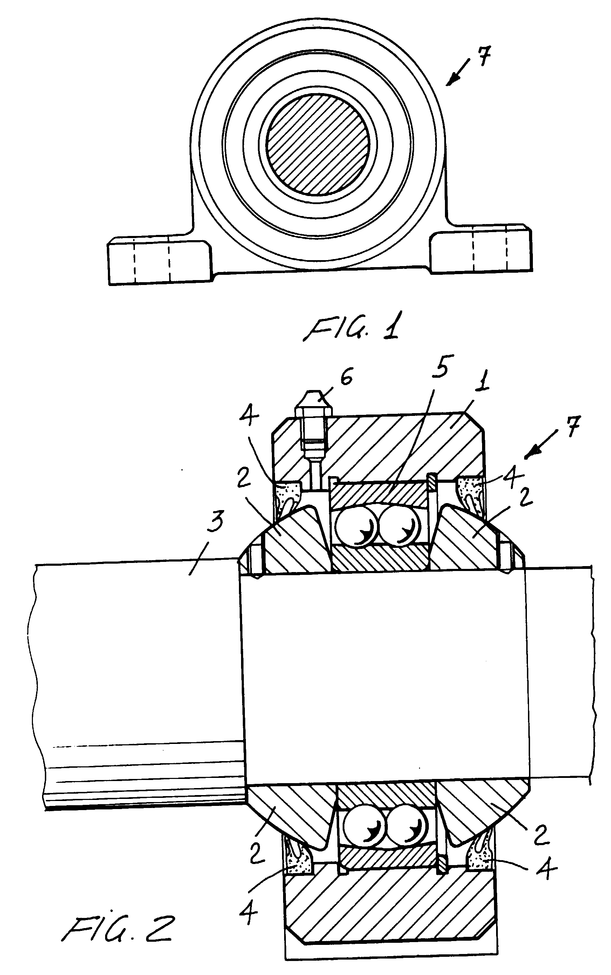

### DESCRIPTION OF THE PREFERRED EMBODIMENT

With reference to the figures of the accompanying drawings, the support for bearings, in particular ball or roller swinging bearings, according to the present invention, which has been indicated generally at the reference number 7, comprises an annular or ring-like supporting body 1 thereon there is mounted a bearing element 5 which supports a rotary shaft 3.

The main feature of the present invention is that two part-spherical portions 2 are provided, which are mounted in said support body 1, the portions being arranged in abutment on the two opposite faces of the bearing 5.

More specifically, the mentioned part-spherical portions 2 are characterized by their specifically designed part-spherical shape which, as seen in cross-section, has a convexity facing away from the bearing 5.

Thus, the bearing 5 will be perfectly held in its position at the center of the support body 1.

Moreover, the part-spherical configuration allows provision of a suitable gap for receiving the lubricating grease, thereby providing an optimal lubrication of the bearing 5.

In fact, the lubricating grease will be always held by gravity in a contact relationship with the side walls of the bearing 5.

Moreover, the above mentioned configuration will provide the possibility of perfectly compensating the oscillations to which the shaft 3 is subjected during its rotary movement.

The above mentioned part-spherical portions 2, as shown, cooperate with sealing gaskets 4, of annular or ring-like shape and having a less diameter than the diameter of support body 1.

The gaskets, in particular, are achieved in housings or recesses formed in the inner surface of the body 1 and are provided with projecting elements, and preferably projecting blade-like elements, adapted to be contact engaged with the curved outer side surfaces of the part-spherical portions 2 so as to prevent the lubricating grease from leaking from the gap.

Simultaneously, said gaskets 4 will prevent powder or other polluting substances from entering the bearing, which polluting substances would be susceptible to negatively affect the operation of the bearing.

From the above disclosure it should be apparent that the invention fully achieves the intended aim and objects.

In particular, the above mentioned part-spherical portions 2 will be usually mounted by pairs on the same shaft by any known assembling method such as by using dowels, keying elements, ring nuts or the like.

Moreover, in order to offset possible expansions between the body of the support 1 and the bearing 5 a free bush can be also arranged.

While the invention has been disclosed and illustrated with reference to a preferred embodiment thereof, it should be apparent that the disclosed embodiment is susceptible to several modifications and variations within the scope of the appended claims.

## Claims

1. A support (7) supporting a swinging bearing (5), said support including an annular support body (1) in which said swinging bearing (5) is mounted, said swinging bearing supporting in turn a rotary shaft (3) subjected to oscillations, characterized in that said support (7) comprises two part-spherical portions (2) arranged in abutment against the respective axially opposite faces of said swinging bearing (5) so as to hold said swinging bearing perfectly centered with respect to said support body (1), said part-spherical portions (2) having outwardly facing convex spherical surfaces against which abut respective annular sealing gaskets (4) connected to said annular support body (1).

2. A support for swinging bearing, according to Claim 1, characterized in that said two part-spherical portions (2) define, with a side thereof facing said swinging bearing (5) a gap for holding lubricating grease for lubricating said swinging bearing (5).

3. A support for swinging bearing, according to Claims 1 and 2, characterized in that said annular sealing gaskets (4) are arranged in annular seats formed in an inner surface of said annular support body (1).

4. A support for swinging bearings, according to the preceding claims, characterized in that said sealing annular gaskets (4) are provided with projecting blade-like elements contacting the convex spherical surfaces of said part-spherical portions (2).

## Patentansprüche

1. Eine Halterung (7), die ein Kipplager (5) trägt, wobei diese Halterung einen ringförmigen Tragekörper (1) umfaßt, in den dieses Kipplager (5) eingebaut ist, wobei dieses Kipplager seinerseits einen drehbaren Schaft (3) trägt, der Schwingungen ausgesetzt ist, dadurch gekennzeichnet, daß diese Halterung (7) zwei teilweise sphärische Teile (2) umfaßt, die an den jeweils axial gegenüberliegenden Seiten dieses Kipplagers (5) angeordnet sind und daran anstoßen, um so dieses Kipplager bezüglich dieses Tragekörpers (1) vollkommen zentriert zu halten, wobei diese teilweise sphärischen Teile (2) konvexe sphärische Oberflächen besitzen, die nach außen weisen und an die entsprechende ringförmige Dichtungen (4) stoßen, die mit diesem ringförmigen Tragekörper (1) verbunden sind.

2. Eine Halterung für ein Kipplager nach Anspruch 1. dadurch gekennzeichnet, daß diese zwei teilweise sphärischen Teile (2) durch eine Seite davon, die diesem Kipplager (5) gegenüberliegt, einen Zwischenraum festlegen, um Schmierfett zur Schmierung dieses Kipplagers (5) aufzunehmen.

3. Eine Halterung für ein Kipplager nach den Ansprüchen 1 und 2, dadurch gekennzeichnet, daß sich diese ringförmigen Dichtungen (4) in ringförmigen Aufnahmen befinden, die auf einer inneren Oberfläche dieses ringförmigen Tragekörpers (1) gebildet sind.

4. Eine Halterung für ein Kipplager nach den vorhergehenden Ansprüchen, dadurch gekennzeichnet, daß diese ringförmigen Dichtungen (4) mit hervorstehenden blattähnlichen Teilen bereitgestellt sind, die die konvexen sphärischen Oberflächen dieser teilweise sphärischen Teile (2) berühren.

## Revendications

1. Un appui (7) supportant un palier oscillant (5), ledit appui incluant un corps d'appui annulaire (1) dans lequel est monté ledit palier oscillant (5), ledit palier oscillant portant de sa part un arbre tournant (3) soumis à des mouvements oscillatoires, caractérisé en ce que ledit appui (7) comprend deux parties (2) partiellement sphériques arrangées de sorte qu'elles butent contre les correspondantes faces axialement opposées dudit palier oscillant (5) de façon à tenir ledit palier oscillant parfaitement centré par rapport audit corps d'appui (1), lesdites parties (2) partiellement sphériques ayant des surfaces sphériques convexes tournées vers l'extérieur contre lesquelles butent de correspondants joints d'étanchéité (4) reliés audit corps d'appui (1) annulaire.

2. Un appui pour paliers oscillants selon la revendication 1, caractérisé en ce que lesdites deux parties (2) partiellement sphériques définissent, moyennant le flanc opposé audit palier oscillant (5), un écartement idoine à contenir de la graisse lubrifiante destinée à lubrifier ledit palier oscillant (5).

3. Un appui pour paliers oscillants selon les revendications 1 et 2, caractérisé en ce que lesdits joints (4) d'étanchéité annulaires sont arrangés dans des rainures annulaires formées dans une surface interne dudit corps (1) d'appui annulaire.

4. Un appui pour paliers oscillants selon les revendications précédentes, caractérisé en ce que lesdits joints (4) d'étanchéité annulaires sont dotés d'éléments saillants en forme de lame qui touchent les surfaces sphériques convexes desdites parties (2) partiellement sphériques.
